# EUROPEAN PATENT APPLICATION

(11) **EP 4 365 057 A1**
(43) Date of publication of application: **08.05.2024**
(21) Application number: 23207866.7
(22) Date of filing: 06.11.2023
(51) Int. Cl.: B61L 15/00, B61L 23/04, G08G 1/16

(54) **VEHICULE FOR PUBLIC TRANSPORT OF PASSENGERS, IN PARTICULAR RAILWAY VEHICULE, PROVIDED WITH A SAFETY SYSTEM FOR ROAD CROSSING**

(30) Priority: 07.11.2022 IT 202200022902
(71) Applicant: Hitachi Rail STS S.p.A., 80147 Napoli (IT)
(72) Inventor: SACCHI, Marco, 80147 NAPOLI (IT); GRABER, Giuseppe, 80147 NAPOLI (IT); AUSIELLO, Walter, 80147 NAPOLI (IT); D'ANDRIA, Gaetano, 80147 NAPOLI (IT); FRATELLI, Luigi, 80147 NAPOLI (IT)
(74) Representative: Studio Torta S.p.A.

(57) **Abstract**

A vehicle (1) for public transport of passengers, in particular a railway vehicle, has two end portions (12a, 12b), opposite each other, at least one of which carries a sensor assembly (15b) so as to detect persons and/or objects outside and in front of said portion; the vehicle further has a safety system (20), for road crossing, provided with a control unit (uP) configured so as to receive data provided by the sensor assembly (15b), and emit a signal (S1;S2) which can be detected outside the vehicle and indicates that a person and/or an object is detected by the sensor assembly (15b) while the vehicle is at a standstill or is at low speed; such signal (S1;S2) can be of optical/visual (S1) type, possibly integrated by an acoustic signal, and/or be defined by a signal (S2) emitted by an antenna (A) mounted on the vehicle (1).

## Description

### CROSS-REFERENCE TO RELATED APPLICATIONS

This patent application claims priority from Italian patent application no. 102022000022902 filed on November 7, 2022, the entire disclosure of which is incorporated herein by reference.

### TECHNICAL FIELD

The present invention relates to a vehicle for public transport of passengers, provided with a safety system for road crossing, in particular for road crossing of pedestrians; more in particular, the present invention refers to a railway vehicle.

### STATE OF THE PRIOR ART

As is known, railway vehicles cover public transport routes, having a series of stops which are normally equipped with platforms, for facilitating the boarding and deboarding operations of the passengers and for making such operations safer.

Generally, the boarding and/or the deboarding of the passengers are monitored by suitable sensors, such as for example cameras or radars or lidars, also utilized for identifying possible dangers relative to the safety of the passengers.

For example, Italian patent application no. 102021000008069 of March 31, 2021, by the same Applicant, relates to a pair of lidar devices which are arranged on the outside of the vehicle, at a cab of the vehicle, and are oriented so as to monitor both the areas arranged in front of the vehicle, and the areas along the body sides of the vehicle.

In the case where a passenger gets off a vehicle at a standstill at a platform, goes towards the tail of the vehicle and then decides to get off the platform and pass behind the vehicle for crossing the road or the rails, a dangerous situation is generated. In these cases, in fact, the drivers of the vehicles which are travelling in an opposite direction on the same roadway, and which are drawing close to or are already side-by-side the vehicle at a standstill at the platform, do not manage to see the pedestrians that decide to cross the road immediately behind such vehicle. In fact, the shape of the vehicle at a standstill at the platform can be relatively wide and prevents from seeing these pedestrians, who therefore risk being invested by the vehicles arriving in the opposite direction.

The same can occur in the case where the pedestrian crosses the road in front of the vehicle, and simultaneously another vehicle arrives unexpectedly overtaking the vehicle at a standstill, in the same movement direction.

Likewise, similar risks relative to the visibility of sudden pedestrian crossings exist for vehicles at a standstill out of the platform spaces, for example in the traffic, or for vehicles proceeding at a reduced speed.

Unfortunately, the safety systems of known type do not manage to identify and thus signal these accident risks. The object of the present invention is thus to reduce or eliminate this type of risks.

### SUMMARY OF THE INVENTION

The above-mentioned object is achieved by a vehicle, as claimed in the appended claim 1, and by a public transport system according to the appended claim 7.

Preferred embodiments of the present invention are then object of dependent claims.

### BRIEF DESCRIPTION OF THE DRAWINGS

In order to better understand the present invention, preferred embodiments are described in the following, by way of non-limiting example and with reference to the accompanying drawings, wherein:
- Figure 1 illustrates, in a top perspective view, a preferred embodiment of the vehicle for public transport, in particular a railway vehicle, provided with a safety system for road crossing, according to the present invention;
- Figure 2 is similar to Figure 1 and shows a situation of danger identified and signalled by the safety system of the vehicle of Figure 1;
- Figure 3 is a rear view of the vehicle of the present invention, during the situation of danger shown in Figure 2; and
- Figures 4A and 4B are block diagrams which schematically show the above-mentioned safety system, according to two different embodiments of the present invention.

### DETAILED DESCRIPTION OF THE INVENTION

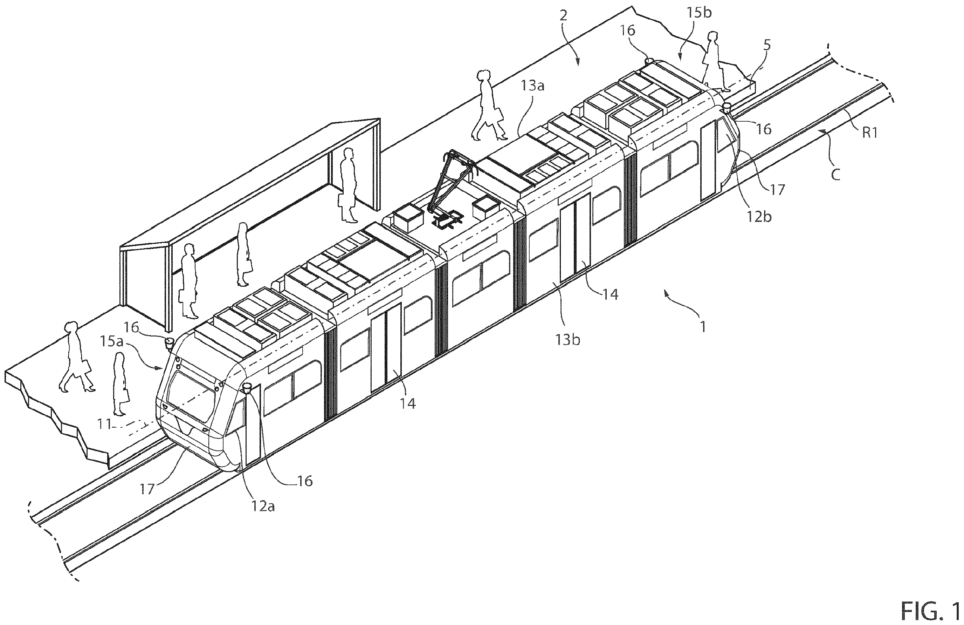

With reference to Figure 1, reference numeral 1 indicates a vehicle for public transport, in particular a railway vehicle. For example, the vehicle 1 is defined by a tram.

The vehicle 1 has a passenger compartment for public transport of persons and, during use, moves on a route or a path, with rails R1 arranged along the road surface of a roadway C. The invention relates to vehicles which move along reserved paths or on so-called "mixed" paths, i.e. along paths in which the rails R1 are in a lane dedicated to public transport or, respectively, in a lane shared with other types of vehicles, besides with pedestrians and other types of obstacles.

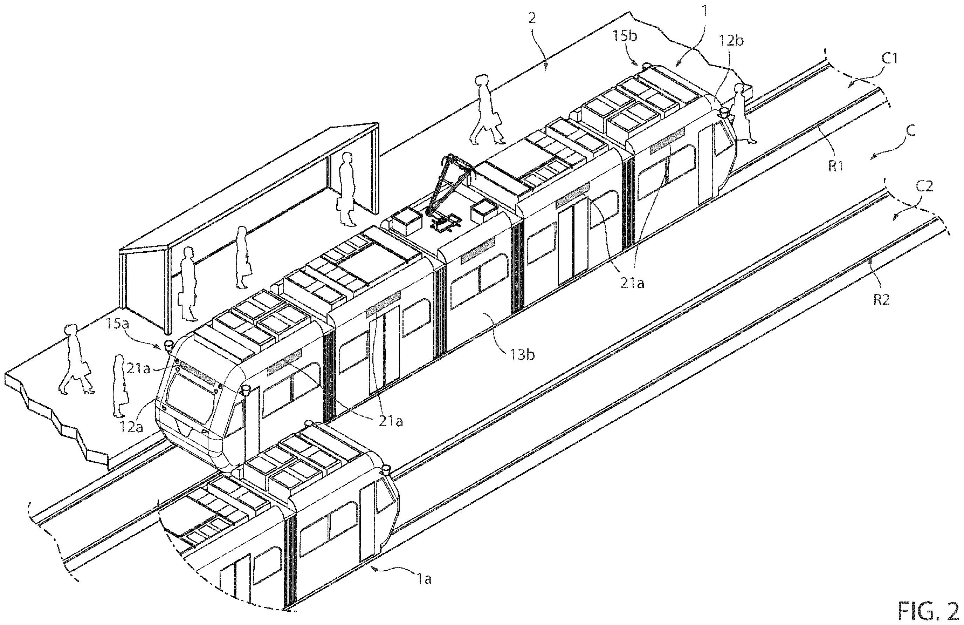

The public transport route includes a series of stops or stations, for the boarding and the deboarding of the passengers: one of such stops is visible and indicated by reference numeral 2 in Figure 1. In particular, the stop 2 is provided with a platform 5. As is shown in Figure 2, at the stop 2, the roadway C comprises at least two lanes C1 and C2, parallel and adjacent to each other, covered by vehicles which travel in movement directions opposite each other. In general, the two lanes C1 and C2 are not separated by any traffic divider element. In the illustrated example, both lanes C1 and C2 are provided with rails, indicated by R1 and R2, respectively.

With reference to Figure 1, the vehicle 1 has a longitudinal axis 11 coinciding with the advancement direction defined by the rails R1 and longitudinally ends with two end portions 12a and 12b, opposite each other. For example, the portions 12a and 12b have, on their inside, respective driver's cabs for a driver, but the vehicle 1 can also be equipped with an autonomous driving system (i.e. without driver) or can communicate with a remote control station so as to be remotely driven by an operator in such station.

Furthermore, the vehicle 1 is, preferably, bidirectional, i.e. can be driven so as to travel in one direction or in the other, in an indifferent manner (it is not anyway excluded that the vehicle 1 can be unidirectional). Based on the movement direction, one of the portions 12a and 12b has the function of "head" or "front end portion", whereas the other one of the portions 12a and 12b has the function of "tail" or "rear end portion". In Figures 1 and 2, the portion 12a of the vehicle 1 at the stop 2 represents the head, whereas the portion 12b represents the tail.

The vehicle 1 further comprises two body sides 13a and 13b, which longitudinally join to each other the portions 12a and 12b, delimit transversely therebetween the passenger compartment and have respective doors 14 for opening/closing corresponding lateral openings. One of the two body sides 13a and 13b faces, in use, the stop 2 and is thus utilized for the boarding and the deboarding of the passengers, whereas the doors 14 of the other body side remain closed and inactive. In the illustrated case, the body side 13a is the one utilized for the boarding onto the vehicle 1 and the deboarding onto the platform 5.

According to a preferred aspect of the present invention, each of the two portions 12a and 12b carries a respective sensor assembly 15a and 15b (shown in a simplified manner) for the external detection of persons and/or objects. The assemblies 15a and 15b are known per se and each one comprises at least one respective sensor 16 capable of perceiving external objects longitudinally arranged in front of and, respectively, behind the vehicle 1, and preferably also along the body sides 13a, 13b. The sensors 16 are mounted on the external surface of the bodywork of the vehicle 1, so as to collect information on possible objects in the surrounding environment, and for example are defined by cameras and/or by LIDARs and/or RADARs and/or ultrasound sensors. In the particular illustrated example, each sensor assembly 15a,15b comprises two sensors 16, respectively arranged at the top vertexes of the portion 12a, 12b, and at least one sensor (not illustrated) arranged at a bumper 17 of the portion 12a, 12b. It is evident, though, that the architecture of the sensor assembly can be different from this non-limiting example.

Preferably, the sensor assemblies 15a and 15b are chosen and/or calibrated so as to be able to collect information both on objects which are relatively close, and on objects which are relatively far.

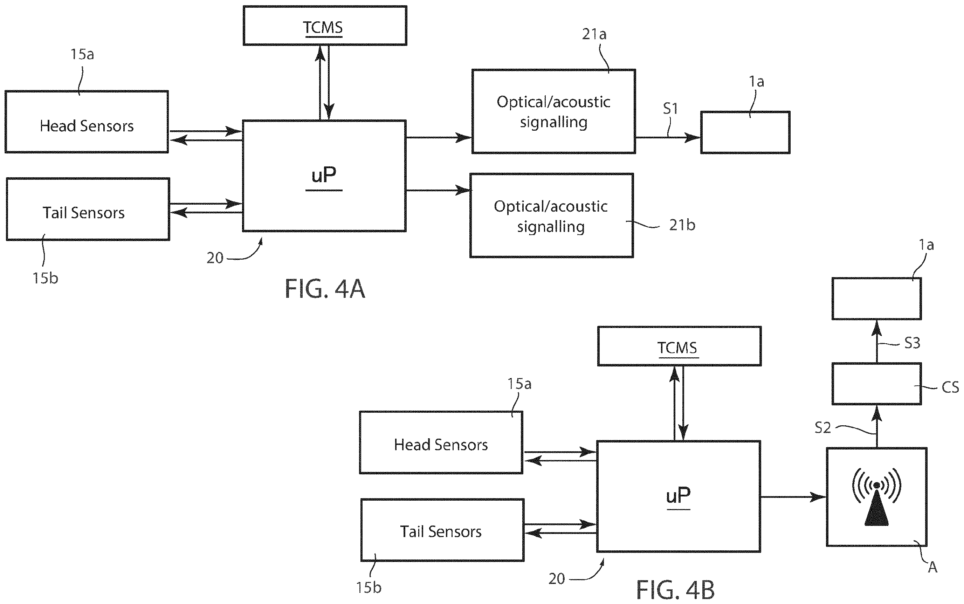

With reference to what is schematically illustrated in Figure 4A, the sensor assemblies 15a and 15b are connected to a control unit uP, which is configured so as to receive and process the data provided by the sensor assemblies 15a,15b for determining the presence and/or the movement of persons and/or objects in front of and respectively behind the vehicle 1. More specifically, the control unit uP receives and processes the data of the sensor assembly 15a both when the vehicle 1 is at a standstill, and when the vehicle 1 is in motion, so as to continuously monitor the areas in front of the vehicle 1 so as to have a function of driver assistance, of known type and not specifically described.

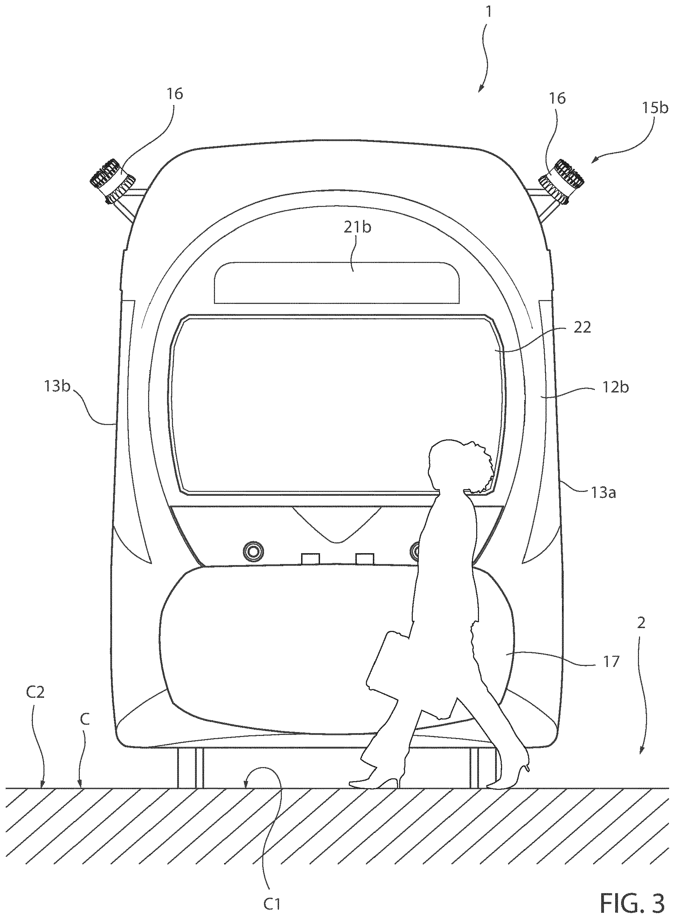

The areas behind the vehicle 1 are monitored when the vehicle 1 is at a halt at the stops 2 or is at a standstill for other motivations along the path, or, more in general, when the speed of the vehicle 1 is below a relatively low predefined threshold, so as to have a function of safety for crossing the roadway C (Figure 3) by pedestrians, cyclists, scooter drivers, etc.... In fact, the sensor assembly 15b and the control unit uP constitute part of a safety system 20 (Figure 4A) also comprising an optical signalling device 21a, defined for example by at least one display.

Preferably, the device 21a is combined with an acoustic signalling device, not illustrated, activated together with the visual/luminous device for improving the effectiveness of the safety signalling, especially in the cases of environmental conditions with intense light.

As is shown in Figure 2, the device 21a is arranged on the external surface of the vehicle 1, at the body side 13b and/or the portion 12a, so as to signal the danger to drivers of vehicles who do not manage to see such danger because the latter is occluded by the shape of the vehicle 1.

Still with reference to Figure 4A, the device 21a is controlled so as to emit an alarm signal S1 which is of optical type (possibly in combination with an acoustic signal, as indicated above) and can thus be visibly detected in a direct manner by persons present on the outside, for example by the drivers of vehicles travelling in the opposite movement direction, when the control unit uP determines that a person and/or an object is present behind the portion 12b, in response to the data provided by the sensor assembly 15b. Preferably, the device 21a is controlled so as to emit the alarm signal S1 when the control unit uP determines that a person and/or an object is in movement behind the portion 12b, and more preferably when a person and/or an object is in movement behind the portion 12b in a transverse direction from the body side 13a (where the boarding and the deboarding of the passengers is provided) towards the body side 13b (i.e. the opposite body side, as is shown in Figure 3), thanks to suitable analysis algorithms, of a type known per se and not specifically described.

For example, the optical signal (S1) provided by the device 21a can be defined by: a blinking light; and/or a brief written message; and/or an illuminated symbol which indicates the alarm/danger or the need to brake; and/or a lighting sequence of a series of LEDs; and/or an image which represents, in real time, the scene detected by the sensor assembly 15b. In the latter case (projection of an image), the control unit uP could be devoid of analysis algorithms for recognizing whether or not the danger is present, since such analysis can be carried out directly by the driver of the vehicle 1a which is arriving unexpectedly.

In this manner, the system 20 warns the drivers of possible other vehicles that a potentially dangerous obstacle is about to cross the roadway C, immediately behind the vehicle 1. Therefore, vehicles 1a travelling along the lane C2 in opposite direction, for example on the rails R2, can slow down or stop at the sight of the alarm signal S1.

As mentioned above, preferably the vehicle 1 is preferably bidirectional, therefore the system 20 comprises a similar optical signalling device 21b arranged at the portion 12b and/or the body side 13a: the device 21b is activated by the unit uP if the sensor assembly 15a detects the presence and/or movement of persons and/or objects, with the vehicle 1 at a standstill or at low speed, when the portion 12a has the function of tail of the vehicle 1, and/or the device 21b projects an image of the scene detected by the sensor assembly 15a.

For example, with reference to Figure 3, as devices 21a and 21b, it is possible to utilize the common information panel which is arranged at the portions 12a and 12b above a windscreen 22, and which is normally utilized for providing indications relative to the public transport route number and/or to the destination terminus.

In order to determine if the vehicle 1 is at a standstill (or below a predefined speed threshold) and to identify which of the two portions 12a,12b is the head and which one is the tail, preferably, the control unit uP communicates with a communication and control system of the vehicle, indicated in Figure 4A as TCMS (acronym for "Train Control and Management System"), which has the function of supervision and communication for all the sub-systems of the vehicle. In general, the information relative to the position at the stops 2 and/or relative to the speed (to verify if it is below a predefined threshold, or if it is null), for activating the signalling device, could be provided to the control unit uP in a different manner, for example: by a speed sensor mounted on the vehicle 1, without any interface by the TCMS system; or by a geolocation or GPS device mounted on the vehicle 1; or by means of an information signal sent in wireless mode from outside the vehicle 1.

According to a further embodiment not specifically illustrated (to be considered in combination with or in alternative to the monitoring of the areas behind the portion 12b), the control unit uP is configured so as to monitor, by means of the sensor assembly 15a, the areas in front of the head defined by the portion 12a, for determining if a person and/or an object is about to cross the road in front of the vehicle 1. If this verification provides positive outcome, the control unit uP activates the visual signalling device (with the possible addition of an acoustic signalling device) which is provided on the body side 13b and/or on the portion 12b, so as to warn the drivers of vehicles which are travelling on the roadway C in the same movement direction and which are about to overtake the vehicle 1.

The embodiment schematically shown in Figure 4B is a solution which can be alternative to or in combination with those described above with reference to Figure 4A.

In this case, the system 20 is configured so as to emit an alarm signal S2 defined by a signal emitted in wireless mode by an antenna A mounted on the vehicle 1. For example, the alarm signal S2 contains information relative to a time reference (also called timestamp) and to the position of the person and/or object that has been identified by the safety system 20 as potential dangerous obstacle in pedestrian crossing behind the vehicle 1. Such position can be represented in terms of absolute position (for example as latitude and longitude), or as relative position (for example with respect to the position of the stop 2 along the route) .

The vehicle 1a will receive, by means of an antenna of its own, a corresponding danger signal S3, indicative of the alarm signal S2 emitted by the vehicle 1. The danger signal S3 will be converted into:
- an optical or sonorous warning emitted by a control board of the driver's cab, if the vehicle 1a is driven by a driver, so that the latter is informed and takes the suitable measures (for example, applies the brake) for avoiding the danger;
- a suitable command signal (for example a braking command) managed by the autonomous driving system, if the vehicle 1a is a driverless vehicle.

According to a preferred aspect of the present invention, the vehicles 1 and 1a constitute part of a fleet of vehicles (for example dedicated to a specific public transport route), which are all equipped with the same safety system 20 and communicate with a central station CS, configured so as to receive the alarm signal S2 emitted by the vehicle 1 (emitting vehicle), which identifies the potentially dangerous obstacle, and so as to transmit the corresponding danger signal S3 to the vehicles of the fleet (recipient vehicles) which are located near the stop 2 and/or the vehicle 1. In general, the central station CS monitors the position of all the vehicles of the fleet in real time, by means of locating systems of known type; therefore, it is capable of identifying if the vehicles of the fleet are in the proximity of the vehicle 1 and the stop 2, and which ones they are. In order to determine such proximity, for example, the control station identifies the recipient vehicles to which to send the danger signal S3 based on a predefined distance threshold, with respect to the position of the identified potential danger (which practically can correspond to the position of the vehicle 1 and of the stop 2) .

The control station CS is also capable of determining the advancement direction of the vehicles of the fleet; therefore, it is capable of warning the vehicles travelling along the lane C2 (i.e. in opposite direction) in case of crossing dangers behind the vehicle 1 (emitting vehicle) in response to the detections of the tail sensor assembly 15b, or of warning those travelling along the lane C1 (in the same direction and in overtaking phase) in case of crossing dangers in front of the vehicle 1 in response to the detections of the head sensor assembly 15a.

Preferably, the danger signal S3 also includes information relative to the distance between the recipient vehicle, to which the danger signal S3 has been sent, and the potential dangerous obstacle identified by the system 20 of the emitting vehicle.

Based on the foregoing, the advantages of the safety system 20 are evident according to the invention, which allows warning the drivers of other vehicles with regard to the potential danger caused by pedestrians (or also possible cyclists, or e-scooter drivers) that result to be hidden by vehicles at a standstill (or below a threshold speed) along the public transport route and start crossing the roadway C, not seen by the drivers of other vehicles running on the same roadway C and which are drawing near (or in overtaking phase).

The embodiments indicated in Figures 4A and 4B result to be effective and are relatively simple to manufacture, as they can utilize some components and infrastructure which are already present in the known public transport systems. In particular, the embodiment of Figure 4A does not depend on external infrastructure and communication networks, therefore it results to be ready to directly provide the optical alarm signal, possibly combined with a sonorous alarm, to the drivers of the vehicles which are drawing near.

Finally, it is clear that modifications and variations can be made to the above-described vehicle, which however do not depart from the scope of protection defined by the claims.

In particular, the safety system 20 could be applied to monodirectional vehicles, as mentioned above, and to vehicles travelling on the road surface without rails (for example, to buses and trolley buses).

## Claims

1. A vehicle for public transport of passengers, in particular a railway vehicle, comprising:
- a first and a second end portion (12b,12a) opposite each other along a longitudinal direction (11);
- a first and a second body side (13a,13b), arranged between said first and second end portion (12b,12a) along said longitudinal direction (11), and defining transversely therebetween a passenger compartment; said first body side (13a) defining, in use, a side for the boarding and deboarding of passengers;
- signalling means (21a;A) that can be activated to emit a signal (S1;S2) which, in use, can be detected outside said vehicle;
**characterised by** comprising a safety system (20), for road crossing, comprising:
- said signalling means (21a;A);
- a sensor assembly (15b) carried by said first end portion (12b) and configured so as to detect persons and/or objects which are present and/or in movement outside said vehicle, in front of said first end portion (12b);
- a control unit (uP) connected to said sensor assembly (15b) and configured so as to receive data provided by said sensor assembly (15b) and activate said signalling means (21a;A), said signal (S1;S2) indicating that a person or an object is present and/or in movement in front of said first end portion (12b), in at least one of the following operating conditions:
(1) when said vehicle is at a standstill, in particular at a stop of a public transport route;
(2) when said vehicle is below a predefined speed threshold;
wherein said signalling means (21a;A) comprise at least one of the following:
- at least one optical indicator (21a) arranged on said second body side (13b) and/or on said second end portion (12a);
- an antenna (A) configured so as to emit said signal (S2) in wireless mode towards a control station and so as to receive a danger signal (S3) in wireless mode from said control station.

2. The vehicle according to claim 1, wherein said optical indicator (21a) is defined by a display, and wherein said control unit (uP) is configured so as to project, onto said display, an image that represents in real time a scene detected by said sensor assembly (15b) in front of said first end portion (12b), in at least one of said operating conditions.

3. The vehicle according to claim 1 or 2, wherein said control unit (uP) is configured so as to:
- process data provided by said sensor assembly (15b) to determine the presence and/or the movement of persons and/or objects in front of said first end portion (12b), and
- activate said signalling means (21a;A) to emit said signal (S1;S2) when said control unit (uP) determines that a person and/or an object is present and/or is in movement, in front of said first end portion (12b), in at least one of said operating conditions.

4. The vehicle according to claim 3, **characterised in that** said control unit (uP) is configured so as to activate said signalling means (21a;A) to emit said signal (S1;S2) if said control unit (uP) determines that a person and/or an object is in movement in front of said first end portion (12b) in a transverse direction from said first body side (13a) towards said second body side (13b).

5. The vehicle according to any one of the preceding claims, wherein said second end portion (12a) carries a further sensor assembly (15a), which is configured so as to detect persons and/or objects which are present and/or in movement outside said vehicle in front of said second end portion, and so as to provide corresponding data to said control unit (uP); said control unit (uP) being configured so as to activate said signalling means (21a;A) to emit said signal (S1;S2), said signal (S1;S2) indicating that a person and/or an object is present and/or in movement in front of said second end portion (12a), in at least one of said operating conditions.

6. The vehicle according to any one of the preceding claims, **characterised by** comprising at least a driver's cab having at least one acoustic and/or visual danger indicator, activated, in use, when said antenna receives said danger signal (S3), which indicates that a signal (S2) has been emitted, in use, by another vehicle which is in at least one of said operating conditions.

7. A public transport system comprising:
- a fleet of vehicles, each one made according to any one of the preceding claims and comprising said antenna;
- at least one control station (CS), configured so as to:
a) receive said signal (S2), emitted in wireless mode by an emitting vehicle (1), belonging to said fleet;
b) transmit said danger signal (S3) to recipient vehicles (1a) that belong to said fleet and are arranged near said emitting vehicle (1), to indicate a potential danger, in response to said signal (S2).

8. The public transport system according to claim 7, wherein said control station (CS) is configured so as to monitor the position of all the vehicles of said fleet and identify said recipient vehicles based on a predefined distance threshold, with respect to the potential danger and/or with respect to the emitting vehicle.

9. The public transport system according to claim 7 or 8, wherein said control station (CS) is configured so as to determine the movement direction of the vehicles of said fleet, and identify said recipient vehicles based on the identified movement direction.
